(19) Europäisches Patentamt

European Patent Office

Office européen des brevets

(11) Veröffentlichungsnummer: **0 463 401 B1**

(12) **EUROPÄISCHE PATENTSCHRIFT**

(45) Veröffentlichungstag der Patentschrift: **20.09.95**

(21) Anmeldenummer: **91109017.3**

(22) Anmeldetag: **03.06.91**

(51) Int. Cl.⁶: **B01F 17/00,** B01F 17/52,
B01F 17/12, B01F 17/50,
B01F 17/08

(54) **Dispergiermittel.**

(30) Priorität: **13.06.90 DE 4018873**

(43) Veröffentlichungstag der Anmeldung:
**02.01.92 Patentblatt 92/01**

(45) Bekanntmachung des Hinweises auf die
Patenterteilung:
**20.09.95 Patentblatt 95/38**

(84) Benannte Vertragsstaaten:
**AT BE CH DE DK ES FR GB IT LI NL SE**

(56) Entgegenhaltungen:
EP-A- 0 380 778
DE-A- 1 137 005
DE-A- 2 007 603
DE-A- 3 508 907

DATABASE WPIL, Accession Nr. 82-51159E
[25], Derwent Publications Ltd, London,GB; &
JP-A-57 077 061 (DENKI KAGAKU KOGYO
CO.) 14-05-1982(Kat. D)

(73) Patentinhaber: **BASF Aktiengesellschaft**
**Carl-Bosch-Strasse 38**
**D-67063 Ludwigshafen (DE)**

(72) Erfinder: **Brueckmann, Ralf, Dr.**
**In den Bannzaeunen 17**
**W-6701 Goennheim (DE)**
Erfinder: **Bury, Willi**
**Sulzbacher Strasse 9**
**W-6700 Ludwigshafen (DE)**
Erfinder: **Dix, Johannes Peter, Dr.**
**Am Haengel 5**
**W-6719 Weisenheim (DE)**
Erfinder: **Herrmann, Manfred, Dr.**
**Parkstrasse 23**
**W-6700 Ludwigshafen (DE)**
Erfinder: **Dlugosch, Waldemar**
**Schwertstrasse 3**
**W-6700 Ludwigshafen (DE)**
Erfinder: **Kromm, Erich, Dr.**
**Schillerstrasse 45**
**W-6714 Weisenheim (DE)**

DATABASE WPIL, Accession Nr. 83-62226K [26], Derwent Publications Ltd, London,GB; & JP-A-58 084 160 (DENKI KAGAKU KOGYO CO.) 20-05-1983(Kat. D)

DATABASE WPIL, Accession Nr. 76-41117X [22], Derwent Publications Ltd, London,GB; & JP-A-51 045 123 (DAI-ICHI KOGYO SEIY) 18-04-1976 (Kat.

IDEM

DATABASE WPIL, Accession Nr. 83-708991 [28], Derwent Publications Ltd, London,GB; & JP-A-58 095 634 (DENKI KAGAKU KOGYO CO.) 07-06-1983

DATABASE WPIL, Accession Nr. 85-219363 [36], Derwent Publications Ltd, London,GB; & JP-A-60 139 328 (SANYO KOKUSAKU PULP) 24-07-1985

Erfinder: **Leiter, Herbert, Dr.**
**Salierstrasse 11**
**W-6701 Maxdorf (DE)**
Erfinder: **Zimmermann, Norbert**
**Jahnstrasse 6**
**W-6701 Waldsee (DE)**
Erfinder: **Kermer, Wolf-Dieter, Dr.**
**Im Schlittweg 4**
**W-6701 Fussgoenheim (DE)**
Erfinder: **Taeger, Klaus, Dr.**
**Otto-Beck-Strasse 30a**
**W-6800 Mannheim 1 (DE)**

**Beschreibung**

Die vorliegende Erfindung betrifft die Verwendung von Dispergiermitteln mit erhöhter biologischer Eliminierbarkeit oder Abbaubarkeit in Farbstoff- und Pigmentpräparationen.

Als Dispergiermittel für technische Anwendungszwecke, insbesondere in Farbstoffzubereitungen und in Färbebädern, werden häufig sulfogruppenhaltige organische Verbindungen verwendet, die jedoch nur unzureichend biologisch eliminierbar bzw. abbaubar sind. Deshalb kann es beim Einsatz derartiger Mittel zur Belastung von Oberflächengewässern kommen.

Aus der DE-C-1 137 005 ist ein Verfahren zur Herstellung von Kondensationsprodukten aus $\alpha$- und $\beta$-Naphtalinsulfonsäure sowie Methylnaphthalinsulfonsäuren und den entsprechenden Naphthalindisulfonsäuren mit Aldehyden bekannt. Die Kondensation wird bei Temperaturen zwischen 100 und 200°C und erhöhtem Druck durchgeführt. Die so erhältlichen Kondensationsprodukte werden als Hilfsmittel in der Gerberei, als Dispergiermittel für Farbstoffe sowie bei der Papierherstellung zur Vermeidung von Harzschwierigkeiten eingesetzt.

Aus der JP-A-82-077 061 sind Dispergiermittel für Zement bekannt, die durch Kondensation von Formaldehyd zusammen mit Naphthalinsulfonsäure, Phenolsulfonsäure und einer aromatischen Carbonsäure und/oder deren Salzen hergestellt werden.

Gemäß der JP-A-83-084 160 erhält man Dispergiermittel für Zement durch Co-kondensation von Alkylnaphthalinsulfonsäuren und einer aromatischen Verbindung, wie Naphthalin, Anthracen, Benzol, Toluol, Phenol, Benzoesäure oder deren Sulfonaten und Huminsäure mit Formaldehyd.

Aus der JP-A-76-045 123 ist die Herstellung von Kondensationsprodukten sulfonierter aromatischer Carbonsäuren oder von Gemischen sulfonierter aromatischer Carbonsäuren zusammen mit Naphthalin und Formaldehyd bekannt. Die so erhältlichen Kondensationsprodukte werden hydraulischen Zementmischungen zugesetzt, um deren Verarbeitbarkeit zu verbessern.

Aus der EP-A-0 380 778 ist die Herstellung von Kondensaten aus Arylsulfonsäuren und Formaldehyd durch Sulfonieren von Arylverbindungen bekannt, die erhältlich sind durch thermische Spaltung eines naphthenischen Rückstandsöls und fraktionierte Destillation der Spaltprodukte der bei 100 bis 120°C unter Normaldruck anfallenden Fraktion. Die Sulfonierung dieser Aromatenfraktion mit Oleum bei Temperaturen von 120 bis 160°C in einer Menge von 0,7 bis 1,2 Gew.-Teilen Oleum, bezogen auf Oleum mit einem $SO_3$-Gehalt von 24 Gew.-%, pro Gewichtsteil der Aromatenfraktion und die anschließende Kondensation der Arylsulfonsäuren mit Formaldehyd erfolgen in bekannter Weise. Die Kondensationsprodukte werden als Dispergiermittel, insbesondere als Dispergiermittel zur Herstellung von Farbstoffzubereitungen verwendet.

Farbstoffzubereitungen oder Färbebäder enthalten üblicherweise als Dispergiermittel Ligninsulfonate, Sulfonate von Phenol-Formaldehyd-Kondensaten oder Naphthalinsulfonsäure-Formaldehyd-Kondensate. Nach dem bestimmungsgemäßen Gebrauch gelangen die genannten Produkte ins Abwasser und sind daraus in Kläranlagen nur zu einem geringen Teil biologisch abbaubar oder eliminierbar.

Der vorliegenden Erfindung lag die Aufgabe zugrunde, Dispergiermittel für Farbstoffzubereitungen und Färbebäder, zur Verfügung zu stellen, die gegenüber den bekannten Dispergiermitteln zu einem hohen Grade eliminierbar oder abbaubar sind und gleichzeitig unverändert gute Dispergiereigenschaften aufweisen.

Demgemäß wurde gefunden, daß Zubereitungen auf Basis üblicher Dispergiermittel eine erhöhte biologische Eliminierbarkeit oder Abbaubarkeit bei unverändert guten Dispergiereigenschaften in Farbstoff- und Pigmentpräparaten aufweisen, wenn sie 3 bis 50 Gew.-%, vorzugsweise 5 bis 30 Gew.-%, einer oder mehrerer aromatischer oder langkettiger aliphatischer Carbonsäuren, deren Salzen oder deren Anhydriden oder einer Mischung hieraus enthalten.

Unter Dispergiermitteln sind hier vor allem sulfogruppenhaltige Dispergiermittel zu verstehen.

Insbesondere betrifft die Erfindung die Verwendung solcher Dispergiermittel, die

A) 50 bis 97 Gew.-%, vorzugsweise 70 bis 95 Gew.-%, eines oder mehrerer Arylsulfonsäure-Formaldehyd-Kondensate, eines oder mehrerer Sulfonate von Phenol-Formaldehyd-Kondensaten, eines oder mehrerer Ligninsulfonate oder einer Mischung hieraus und

B) 3 bis 50 Gew.-%, vorzugsweise 5 bis 30 Gew.-%, einer oder mehrerer aromatischer oder langkettiger aliphatischer Carbonsäuren, deren Salzen oder deren Anhydriden oder einer Mischung hieraus enthalten, wobei die Zugabe der Komponenten B vor, während oder nach dem Sulfonierungsschritt oder dem Kondensationsschritt bei der Herstellung der Komponenten A erfolgt.

Als Sulfonierungsschritt ist hier auch der Sulfitaufschluß aus Lignin zur Gewinnung von Ligninsulfonaten zu verstehen.

Unter Farbstoffpräparationen sind feste oder flüssige Farbstoffzubereitungen sowie Färbebäder zu verstehen.

EP 0 463 401 B1

Die Dispergiermittel eignen sich zur Verwendung in Farbstoffzubereitungen und in Färbebädern.

Bevorzugt verwendete Dispergiermittel sind solche auf Basis von Kondensaten von Arylsulfonsäuren und Formaldehyd, die erhältlich sind durch

a) Sulfonieren aromatischer Verbindungen zu Arylsulfonsäuren,

b) Kondensieren der Arylsulfonsäuren mit Formaldehyd

und wobei die Sulfonierung a) oder die Kondensation b) oder beide Schritte in Gegenwart von 5 bis 50 Gew.-%, vorzugsweise 6 bis 42 Gew.-%, bezogen auf die bei der Sulfonierung a) eingesetzten aromatischen Verbindungen, an aromatische Gruppen oder langkettige aliphatische Reste enthaltenden Carbonsäuren, deren Salze oder deren Anhydriden erfolgt.

Die Herstellung derartiger Dispergiermittel ist bekannt. Sie erfolgt im wesentlichen in zwei Verfahrensschritten. Im Verfahrensschritt a) werden aromatische Verbindungen sulfoniert. Geeignete aromatische Verbindungen hierfür sind beispielsweise Naphthalin oder Gemische aromatischer Verbindungen, die mindestens 10 Gew.-% Naphthalin enthalten. Handelsübliche Mischungen von Aromaten enthalten außer Naphthalin beispielsweise Benzol, substituierte Benzole, Alkylnaphthaline, wie 1-Methylnaphthalin, 2-Methylnaphthalin, Anthracene, Biphenyl, Inden, Acenaphthen oder substituiertes Inden oder substituiertes Acenaphthen.

Vorzugsweise setzt man zur Herstellung dieser Dispergiermittel als aromatische Verbindungen beim Verfahrensschritt a) solche aromatischen Verbindungen ein, die durch thermische Spaltung eines naphthenischen Rückstandsöl und Fraktionieren der Spaltprodukte erhältlich sind. Die naphthenischen Rückstandsöle fallen beispielsweise beim Cracken von Leichtbenzin an. Sie werden z.B. in der DE-A-29 47 005 als hochsiedende aromatische Kohlenwasserstofföle bezeichnet. Das naphthenische Rückstandsöl wird vorzugsweise bei Temperaturen von 1400 bis 1700°C thermisch gespalten. Die Spaltprodukte werden dann einer fraktionierten Destillation zugeführt. Die bei Normaldruck (1013 mbar) von 100 bis 120°C übergehende Fraktion wird gesammelt und bei der Sulfonierung als aromatische Verbindung eingesetzt. Eine solche Fraktion wird bei dem bekannten Acetylen-Öl-Quench-Prozeß üblicherweise als Nebenprodukt erhalten, vgl. Ullmann's Encyclopedia of Industrial Chemistry, VCH Verlagsgesellschaft mbH, Weinheim, 1985, Volume 71, Seiten 107-112.

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

|  | Gew.% in der Aromatenfraktion |
|---|---|
| Naphthalin | 30-55 |
| 2-Methylnaphthalin | 5-15 |
| 1-Methylnaphthalin | 4-10 |
| Inden | 3-10 |
| Diphenyl | 1- 5 |
| Methylinden | 1- 5 |
| Acenaphthen | 1- 4 |

Die Aromatenfraktion enthält außerdem an identifizierten Bestandteilen in Mengen von 0,1 bis etwa 2 Gew.% folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acetnaphthylen und Toluol. Bei der Sulfonierung wird vorzugsweise eine Aromatenfraktion eingesetzt, die 40 bis 45 Gew.% Naphthalin enthält.

Die aromatischen Verbindungen werden im Verfahrensschritt a) mit Oleum bei Temperaturen von 120 bis 160, vorzugsweise 135 bis 145°C sulfoniert. Bei höheren Temperaturen werden kürzere Reaktionszeiten benötigt als bei niedrigeren Temperaturen. Beispielsweise ist die Sulfonierung bei einer Temperatur von 145°C innerhalb eines Zeitraums von 1,6 bis 2,6 Stunden beendet, während man bei einer Temperatur von 140°C dafür 2,25 bis 4 Stunden und bei 135°C 3,25 bis 6 Stunden benötigt.

Pro Gew.-Teil der aromatischen Verbindungen setzt man bei der Sulfonierung 0,7 bis 1,5 Gew.-Teile Oleum ein, bezogen auf eine rauchende Schwefelsäure mit einem $SO_3$-Gehalt von 65 Gew.-%. Die Sulfonierung der aromatischen Verbindungen kann selbstverständlich auch mit konzentrierter Schwefelsäure bzw. mit einer Schwefelsäure erfolgen, die einen $SO_3$-Gehalt von beispielsweise 10 bis 60 Gew.-% aufweist. Die bei der Sulfonierung a) eingesetzte Menge an Oleum richtet sich nach dem $SO_3$-Gehalt in der rauchenden Schwefelsäure. Wenn man den oben angegebenen Temperaturbereich bei der Sulfonierung einhält und die oben beschriebenen Mengen an Oleum einsetzt, so erhält man in der Naphthalin

4

enthaltenden Mischung aromatischer Verbindungen bzw. beim Einsatz von reinem Naphthalin Sulfonierungsprodukte, die α- und β-Naphthalinsulfonsäure im Verhältnis von 20:1 bis 1:8, vorzugsweise 10:1 bis 1:5 enthalten.

Bereits bei der Sulfonierung und/oder bei der sich daran anschließenden Kondensation gemäß Verfahrensschritt b) werden Carbonsäuren eingesetzt, die eine aromatische Gruppe oder einen langkettigen aliphatischen Rest enthalten, bzw. deren Salze oder Anhydride, wobei aromatische Carbonsäuren und ihre Derivate bevorzugt werden.

Geeignete aromatische Carbonsäuren und Derivate hiervon sind bei Spielsweise Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure und Säureanhydride, wie beispielsweise Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 C-Atomen natürlichen oder synthetischen Ursprungs, also beispielsweise höhere Fettsäuren wie Caprylsäure, Caprinsäure, Laurinsäure, Myristinsäure, Palmitinsäure, Stearinsäure, Ölsäure, Linolsäure oder Linolensäure oder synthetisch hergestellte Carbonsäuren wie 2-Ethylhexansäure, Isononansäure und Isotridecansäure.

Weiterhin sind auch Mischungen von Anhydriden, Mischungen von Carbonsäuren, Mischungen von Salzen der in Betracht kommenden Carbonsäuren sowie Mischungen von Carbonsäuren und Anhydriden von Interesse. Als Salze der genannten Carbonsäuren kommen die Alkali-, Ammonium-, Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak und Alkanolaminen, wie Ethanolamin, Diethanolamin oder Triethanolamin, erhältlich sind.

Besonders bevorzugt werden Natriumbenzoat, Natriumphenylacetat, Natriumsalicylat, Natrium-4-hydroxylbenzoat, Natriumterephthalat, Natrium-2-hydroxy-3-naphthalincarboxylat, Naphthalin-1-carbonsäure, Phthalsäureanhydrid und Benzoesäure verwendet.

Die aromatische Gruppen oder langkettige aliphatische Reste enthaltenden Carbonsäuren werden in Mengen von 5 bis 50, vorzugsweise 6 bis 42 Gew.-%, insbesondere 10 bis 30 Gew.-%, bezogen auf die bei der Sulfonierung a) eingesetzten aromatischen Verbindungen angewendet. Die genannten Carbonsäuren, deren Salze oder deren Anhydride können vor, während oder nach der Sulfonierung gemäß a) oder auch bei der Kondensation gemäß Verfahrensschritt b) eingesetzt werden. Ebenso ist es möglich, diese Verbindung zur Modifizierung der Kondensationsprodukte auf Basis von Arylsulfonsäuren und Formaldehyd sowohl bei der Sulfonierung a) und der Kondensation b) zuzusetzen.

Die sulfonierten Produktgemische werden anschließend in üblicher Weise mit Formaldehyd kondensiert. Hierzu kann man direkt vom Sulfonierungsgemisch ausgehen, es mit Wasser verdünnen und durch Zugabe von Formaldehyd kondensieren, z.B. in dem Temperaturbereich von 90 bis 105°C. Die Kondensation kann selbstverständlich auch unter erhöhtem Druck bei 105 bis 150°C durchgeführt werden. Für die Kondensationsreaktion benötigt man etwa 4 bis 12, vorzugsweise 7 bis 9 Stunden. Pro Gew.-Teil der bei der Sulfonierung a) eingesetzten aromatischen Verbindungen benötigt man bei der Kondensation etwa 0,05 bis 0,20, vorzugsweise 0,07 bis 0,17 Gew.-Teile Formaldehyd berechnet 100 %ig). Der Formaldehyd wird vorzugsweise als 10 bis 50 gew.-%ige wäßrige Lösung bei der Kondensation eingesetzt.

Nach Beendigung der Kondensation wird das Reaktionsgemisch neutralisiert. Hierfür kann man Natronlauge, Kalilauge, Calciumhydroxyd, Soda oder Natriumhydrogencarbonat verwenden. Man kann auch einen Überschuß des Neutralisationsmittels einsetzen und den pH-Wert durch Zugabe üblicher Mineralsäuren wie Schwefelsäure oder der obengenannten aromatischen oder langkettigen aliphatischen Carbonsäuren wieder auf den gewünschten Wert absenken. Der pH-Wert der wäßrigen Lösung, die das Kondensat gelöst enthält, wird üblicherweise auf Werte von 6 bis 11 eingestellt. Es ist jedoch auch möglich, das Kondensationsprodukt in fester Form durch Sprühtrocknung aus der Lösung zu gewinnen.

Die in Gegenwart von aromatische Gruppen oder langkettige aliphatische Reste enthaltenden Carbonsäuren herstellbaren Kondensationsprodukte auf Basis von Arylsulfonsäuren und Formaldehyd sind leicht in Wasser löslich und eignen sich wie auch die anderen erfindungsgemäßen verwendeten Dispergiermittel als Dispergiermittel in Farbstoffzubereitungen oder auch als Dispergiermittel in Färbebädern beim Färben von Textilien. Farbstoffe, die in Wasser unter Verwendung von Dispergiermitteln zu Farbstoffzubereitungen formuliert werden, sind die in Wasser schwerlöslichen bzw. unlöslichen Farbstoffe, z.B. Küpenfarbstoffe, Dispersionsfarbstoffe sowie in Wasser schwer- bis unlösliche optische Aufheller. Dispersionsfarbstoffe sind z.B. in Wasser unlösliche bis schwerlösliche Azofarbstoffe, Farbstoffe aus der Reihe der Chinophthalone und deren nicht wasserlösliche Derivate, Anthrachinonfarbstoffe sowie Farbstoffe aus anderen Verbindungsklassen, die in Wasser schwer- bis unlöslich sind und welche auf synthetisches Fasermaterial wie lineare

5

Polyester aus wäßrigem Bad aufziehen. Bei der Anwendung in Farbstoffzubereitungen benötigt man, bezogen auf 100 Gew.-Teile Farbstoff, 8 bis 500, vorzugsweise 25 bis 400 Gew.-Teile der Dispergiermittel. Beim Einsatz als Färbereihilfsmittel in Färbebädern zum Färben von Textilien werden die erfindungsgemäßen Dispergiermittel üblicherweise in Mengen von 0,5 bis 5 g/l, bezogen auf das Färbebad, eingesetzt. Die so erhältlichen Farbstoffzubereitungen sind über einen längeren Zeitraum lagerstabil, gestatten einwandfreie egale Wickelkörperfärbungen ohne Abfiltrationen von Farbstoff während des Färbevorgangs und sind zu einem hohen Grad abbaubar oder zumindest eliminierbar.

Weitere bevorzugte Dispergiermittel sind solche, die erhältlich sind durch nachträgliches Zumischen der aromatischen oder langkettigen aliphatischen Carbonsäuren B oder deren Salzen und Anhydriden zu üblichen Dispergiermitteln, insbesondere zu den Verbindungen A. Dabei geschieht das Zumischen, nachdem die üblichen Dispergiermittel bzw. die Verbindungen A hergestellt worden sind.

Es war zu erwarten gewesen, daß in Mischungen von üblichen Dispergiermitteln mit gut biologisch eliminierbaren oder abbaubaren Produkten die biologischen Eliminierbarkeiten bzw. Abbaubarkeiten ansteigen. Die hierbei gemessenen Werte übertreffen die zu errechnenden Werte jedoch überraschenderweise um ca. 10 bis ca. 30 %. Dies zeigt, daß in diesen Mischungen Synergismen bezüglich der biologischen Eliminierbarkeit bzw. Abbaubarkeit auftreten, wobei die Dispergiereigenschaften praktisch unverändert bleiben.

Als Ligninsulfonate werden vor allem solche Sulfonate, hierbei insbesondere die Alkalimetallsalze, eingesetzt, deren Gehalt an Sulfogruppen 25 Gew.-% nicht übersteigt. Besonders bevorzugt sind Ligninsulfonate mit einem Gehalt von 5 bis 15 Gew.-% an Sulfogruppen.

Als Arylsulfonsäure-Formaldehyd-Kondensate und Sulfonate von Phenol-Formaldehyd-Kondensaten werden vor allem solche mit einem maximalen Gehalt an Sulfogruppen von 40 Gew.-% eingesetzt.

Geeignete Arylsulfonsäure-Formaldehyd-Kondensate basieren beispielsweise auf Naphthalin oder auf den oben genannten Gemischen aromatischer Verbindungen, die mindestens 10 Gew.-% Naphthalin enthalten, welche zur Arylsulfonsäure-Komponente sulfoniert werden können. Besonders bevorzugt sind Kondensate, die auf den oben beschriebenen durch thermische Spaltung eines naphthenischen Rückstandsöl und fraktionierte Destillation der Spaltprodukte erhältlichen Aromaten-Gemischen basieren.

Die eingesetzten Naphthalinsulfonsäure-Komponenten sind hierbei in der Regel Isomerengemische mit einem Verhältnis der $\alpha$- zu den $\beta$-Isomeren von 20:1 bis 1:8, insbesondere 10:1 bis 1:5.

Als aromatische oder langkettige aliphatische Carbonsäuren B können im Prinzip die gleichen Verbindungen, die oben genannt sind, verwendet werden.

Besonders geeignete Carbonsäuren B sind hierbei beispielsweise Naphthalincarbonsäuren, Hydroxynaphthalincarbonsäuren, o-, m-, p-Benzoldicarbonsäure, o-, m-, p-Hydroxybenzoesäure, Benzoesäure, p-Phenyl- und Diphenylessigsäure sowie Benzoltricarbonsäuren und Benzoltetracarbonsäuren, weiterhin Ölsäure und Isononansäure.

Diese Verbindungen werden entweder als freie Säure und/oder als Salz und/oder durch Anhydrid zugemischt. Bevorzugt werden Salze eingesetzt, die durch Neutralisation mit Natron- oder Kalilauge, durch Ammoniak oder Alkanolammoniumverbindungen erhalten werden können.

Die erfindungsgemäße verwendeten Dispergiermittel können neben üblichen Dispergiermitteln bzw. den sulfogruppenhaltigen Verbindungen A und den aromatischen Carbonsäuren B weiterhin hierbei übliche Hilfsmittel C in einer Menge bis zu ca. 5 Gew.-% enthalten, z.B. andere Dispergatoren, Tenside, Entschäumer, Hydrotrope, Stellmittel, Komplexierungsmittel oder Biozide.

Die Dispergiermittel können weiterhin auch mit guten Ergebnissen in Pigmentpräparationen eingesetzt werden. Derartige Pigmentpräparationen können dann beispielsweise für die Einfärbung von Tapeten, Papiermassen, Pflanzenschutzmitteln, Bauwerkstoffen, Detergentien oder Malfarben verwendet werden.

Der biologische Eliminationsgrad bzw. der Abbaugrad wurde nach dem Zahn-Wellens-Test (R. Zahn, H. Wellens, Chem. Zeitung, Band 90, 228 (1974); OECD 302 B entspricht DIN 38412, Teil 25) ermittelt. Bei diesem Test wird ein Belebt-Schlamm verwendet, der eine Mischung verschiedener Mikroorganismen und mineralische Nährstoffe enthält. Die wäßrige Lösung dieses Belebt-Schlamms wird zusammen mit einer wäßrigen Lösung der Prüfsubstanz während einer bestimmten Zeit (bis zu 28 Tagen) bei einer konstanten Temperatur von ca. 22 °C unter weitgehendem Lichtausschluß belüftet. Die Abnahme der Menge an Prüfsubstanz wird durch Bestimmung des chemischen Sauerstoffbedarfs (CSB-Wert) oder des gelösten organischen Kohlenstoffs (DOC-Wert) ermittelt. Um von einem guten biologischen Abbaugrad bzw. Eliminationsgrad zu sprechen, wird ein Wert von > 70 % gefordert; vgl. U. Pagga, Umweltschutz-Umweltanalytik, Band 4, 9 (1984).

Die erfindungsgemäß zu verwendenden aromatische Carbonsäuren eingebaut enthaltenden Kondensationsprodukte auf Basis von Arylsulfonsäuren und Formaldehyd sind in der Regel zu mehr als 55 %, insbesondere zu mehr als 70 % abbaubar oder zumindest eliminierbar, während handelsübliche Naphthalinsulfonsäure-Formaldehyd-Kondensate unter gleichen Bedingungen nur zu 30 und Ligninsulfonate nur zu etwa 33 % eliminiert werden.

Beispiele

Die in den Beispielen angegebenen Teile sind Gew.-Teile. Die Angaben in Prozent beziehen sich auf das Gewicht der Stoffe. Bei der Herstellung der Dispergiermittel wurden, soweit nicht anders angegeben, Arylverbindungen eingesetzt, die durch fraktionierte Destillation der Spaltprodukte eines naphthenischen Rückstandsöls gemäß EP-A-0 380 778 anfielen. Dabei wurde die bei 100 bis 120°C unter Normaldruck (1013 mbar) übergehende Fraktion verwendet. Die thermische Spaltung des naphthenischen Rückstandsöls wurde bei Temperaturen in dem Bereich von 1400 bis 1700°C durchgeführt.

In der bei der fraktionierten Destillation der Spaltprodukte erhaltenen Mischungen von Arylverbindungen wurden im einzelnen folgende Stoffe identifiziert:

| Verbindung | % |
| --- | --- |
| Naphthalin | 44,60 |
| 2-Methylnaphthalin | 10,00 |
| 1-Methylnaphthalin | 6,20 |
| Inden | 7,40 |
| Diphenyl | 2,20 |
| Methylinden | 1,95 |
| Acenaphthen | 1,70 |
| Fluren | 1,30 |
| Indan | 1,22 |
| Phenanthren | 1,10 |
| Methylindan | 1,10 |
| Dimethylnaphthalin | 1,13 |
| Ethylnaphthalin | 0,82 |
| p-m-Xyole | 0,80 |
| Tetralin | 0,80 |
| Styrol | 0,60 |

Der Grad der Eliminierung der Dispergiermittel wurde noch dem Zahn- und Wellens-Test gemäß DIN 38412, Teil 25, bestimmt.

Dispergiermittel 1

128 Teile des Gemisches der oben beschriebenen Arylverbindungen und 29 Teile Phthalsäureanhydrid wurden in einem beheizbaren Reaktionsgefäß, das mit einem Rührer versehen war, vorgelegt und unter Rühren auf eine Temperatur von 60°C erwärmt. Man gab dann innerhalb von 4 Stunden 107 Teile Oleum, das 65 % $SO_3$ enthielt, zu und sorgte dafür, daß die Temperatur nicht über 70°C anstieg. Nach Zugabe des Oleums wurde das Reaktionsgemisch 4 Stunden bei 60°C und 5 Stunden bei 135°C nachgerührt. Man ließ es dann auf 70°C abkühlen, gab 150 Teile Wasser und danach 50 Teile 30 %igen wäßrigen Formaldehyd zu und kondensierte das Gemisch durch 8-stündiges Erhitzen auf eine Temperatur von 100°C. Danach fügte man 500 Teile Wasser und 125 Teile 50 %ige wäßrige Natronlauge zu. Der pH-Wert wurde zu 11,2 bestimmt. Die Mischung wurde dann eine Stunde bei 90°C gerührt und mit 15 Teilen einer 20 %igen wäßrigen Schwefelsäure versetzt, so daß sich ein pH-Wert von 8,4 einstellte.

Die Lösung hatte einen Feststoffgehalt von 27,1 %.

In dem sulfonierten Produkt betrug das Verhältnis von $\alpha$- zu $\beta$-Naphthalinsulfonsäure 2,3:1.
Das Kondensationsprodukt war zu 72 % eliminierbar.

Dispergiermittel 2

Man verfuhr wie bei der Herstellung von Dispergiermittel 1 beschrieben, jedoch mit der Ausnahme, daß man statt 29 Teilen Phthalsäureanhydrid 52 Teile Naphthalin-1-carbonsäure zu dem Gemisch der oben beschriebenen Arylverbindungen zugab. Der pH-Wert der erhaltenen wäßrigen Lösung des Dispergiermittels betrug 8,1 und ihr Feststoffgehalt lag bei 28,1 %. Das Verhältnis von $\alpha$- zu $\beta$-Naphthalinsulfonsäuren betrug 1,7:1. Das sprühgetrocknete Produkt hatte einen biologischen Eliminations/Abbaugrad von > 70 %.

### Dispergiermittel 3

Man verfuhr wie bei der Herstellung von Dispergiermittel 1 beschrieben, jedoch mit der Ausnahme, daß man statt 29 Teilen Phthalsäureanhydrid 25 Teile Benzoesäure zu dem Gemisch der oben beschriebenen Arylverbindungen zugab. Das Verhältnis von $\alpha$- zu $\beta$-Naphthalinsulfonsäuren betrug 1,2:1. Die wäßrige Lösung des Dispergiermittels hatte einen Feststoffgehalt von 25,8 %. Der biologische Eliminations/Abbaugrad im Zahn-Wellens-Test des sprühgetrockneten Produktes betrug 75 %.

### Dispergiermittel 4

128 Teile reines Naphthalin (96-98 %ig) und 25 Teile Benzoesäure wurden wie unter Dispergiermittel 1 beschrieben, vorgelegt und unter Rühren auf eine Temperatur von 90 °C erwärmt. Man gab dann innerhalb von 2 Stunden 107 Teile Oleum, das 65 % $SO_3$ enthielt zu und sorgte dafür, daß die Temperatur dabei nicht über 95 °C anstieg. Nach Zugabe des Oleums wurde das Reaktionsgemisch auf 140 °C erwärmt und 3,5 Stunden bei dieser Temperatur nachgerührt. Man ließ es dann auf 80 °C abkühlen, gab 150 Teile Wasser und dann 50 Teile 30 %igen wäßrigen Formaldehyd zu und kondensierte das Gemisch 8 Stunden bei einer Temperatur von 100 °C.

Danach fügte man 500 Teile Wasser und 131 Teile 50 %ige wäßrige Natronlauge zu. Die Mischung wurde bei einem pH-Wert von 10,5 eine Stunde bei 90 °C gerührt. Durch Zusatz von 365 Teilen Wasser und 12 Teilen einer 20 %igen wäßrigen Schwefelsäure erhält man eine Lösung mit einem pH-Wert von 8,4 und einem Feststoffgehalt von 20 %. In dem sulfonierten Produkt betrug das Verhältnis von $\alpha$- zu $\beta$-Naphthalinsäure 1:4,6.

Der biologische Eliminationsgrad im Zahn-Wellens-Test des sprühgetrockneten Produktes betrug 70 %.

### Dispergiermittel 5

Man arbeitete wie unter Dispergiermittel 3 beschrieben, jedoch mit der Ausnahme, daß man jetzt statt mit 107 Teilen Oleum, das 65 % $SO_3$ enthielt, mit 115 Teilen Oleum, das 65 % $SO_3$ enthielt, die Sulfonisierung durchführte.

Das Verhältnis von $\alpha$- zu $\beta$-Naphthalinsulfonsäuren betrug 1:1,5. Die wäßrige Lösung des Dispergiermittels hatte einen Feststoffgehalt von 25,6 %. Das Kondensationsprodukt war zu > 70 % eliminierbar.

### Dispergiermittel 6

Man verfuhr wie bei der Herstellung von Dispergiermittel 1 beschrieben, jedoch mit der Ausnahme, daß man statt 29 Teilen Phthalsäureanhydrid 56 Teile Ölsäure zu dem Gemisch der oben beschriebenen Arylverbindungen zugab. Das Verhältnis von $\alpha$- zu $\beta$-Naphthalinsulfonsäuren betrug 2,01:1. Die wäßrige Lösung des Dispergiermittels hatte einen pH-Wert von 8,2 und einen Feststoffgehalt von 28,3 %. Das sprühgetrocknete Produkt hatte einen biologischen Eliminations/Abbaugrad von 86 %.

### Dispergiermittel 7 bis 24

Die Dispergiermittel 7 bis 24 wurden durch nachträgliches Zumischen von Natriumsalzen aromatischer Carbonsäuren zu Dispergiermitteln, die eine vergleichsweise geringe biologische Eliminierbarkeit bzw. Abbaubarkeit aufweisen, hergestellt. Als Ausgangsdispergiermittel wurden hierbei verwendet:

(I) die oben beschriebene und für die Herstellung von Dispergiermittel 1 eingesetzte Mischung aus Arylverbindungen, die bei der fraktionierten Destillation der Spaltprodukte eines naphthenischen Rückstandsöls erhalten wurde;

(II) ein handelsübliches Naphthalinsulfonsäure-Formaldehyd-Kondensat mit einem Sulfogruppen-Gehalt von 30 %, hergestellt durch Kondensation von Naphthalinsulfonsäure ($\alpha$- zu $\beta$-Isomerenverhältnis 1:4,5) mit Formaldehyd;

(III) handelsübliches Natrium-Ligninsulfonat mit einem Sulfogruppen-Ge

halt von 7 %;

(IV) handelsübliches Natrium-Ligninsulfonat mit einem Sulfogruppen-Gehalt von 14 %;

(V) handelsübliches Natrium-Ligninsulfonat mit einem Sulfogruppen-Gehalt von 22 %.

Als Natriumsalze aromatischer Carbonsäuren wurden Natriumbenzoat, Natrium-4-hydroxybenzoat, Natriumphenylacetat, Natriumsalicylat und Natriumterephthalat eingesetzt. Natriumsalicylat und Natriumterephthalat wurden hierzu jeweils durch Neutralisation der freien Säuren mit Natronlauge bis auf einen pH-Wert von 9,5 und anschließendes Eindampfen hergestellt.

Die folgende Tabelle zeigt die gemessenen biologischen Eliminierbarkeiten bzw. Abbaubarkeiten E der hergestellten Mischungen.

| Beispiel Nr. | Dispergiermittel | E [%] |
|---|---|---|
| **erfindungsgemäße Mischungen:** | | |
| 7 | 95 % I + 5 % Na-Benzoat | 70 |
| 8 | 85 % I + 15 % Na-Benzoat | 70 |
| 9 | 90 % I + 10 % Na-Phenylacetat | 77 |
| 10 | 70 % I + 30 % Na-Phenylacetat | 81 |
| 11 | 90 % I + 10 % Na-Salicylat | 75 |
| 12 | 70 % I + 30 % Na-Salicylat | 75 |
| 13 | 90 % II + 10 % Na-Benzoat | 56 |
| 14 | 70 % II + 30 % Na-Benzoat | 65 |
| 15 | 70 % II + 30 % Na-4-Hydroxybenzoat | 57 |
| 16 | 90 % II + 10 % Na-Phenylacetat | 58 |
| 17 | 70 % II + 30 % Na-Phenylacetat | 73 |
| 18 | 90 % III + 10 % Na-Benzoat | 57 |
| 19 | 70 % III + 30 % Na-Benzoat | 60 |
| 20 | 70 % III + 30 % Na-4-Hydroxybenzoat | 74 |
| 21 | 90 % III + 10 % Na-Terephthalat | 68 |
| 22 | 70 % III + 30 % Na-Terephthalat | 74 |
| 23 | 70 % IV + 30 % Na-Benzoat | 59 |
| 24 | 70 % V + 30 % Na-Benzoat | 63 |

Tabelle (Forts.)

| Beispiel Nr. | Dispergiermittel | E [%] |
|---|---|---|
| Zum Vergleich: | | |
| | 100 % I | 45 |
| | 100 % II | 30 |
| | 100 % III | 30 |
| | 100 % IV | 27 |
| | 100 % V | 14 |
| | 100 % Na-Benzoat | 99 |
| | 100 % Na-Phenylacetat | 99 |
| | 100 % Na-Salicylat | 99 |
| | 100 % Na-4-Hydroxylbenzoat | 99 |
| | 100 % Na-Terephthalat | 99 |

Die Messungen erfolgten gemäß den OECD-Guidelines 302 B (Zahn-Wellens-Test) bei einer Schlammkonzentration von 1 g TS/l und einer Prüfkonzentration von ca. 400 mg CSB/l.

Anwendungsbeispiele

Die Feinverteilung in den Farbstoffzubereitungen wurde nach dem Schleudertest nach Richter und Vescia, Melliand Textilberichte, 1965, Heft 6, S. 621 - 625, charakterisiert.

Die Zahlenwerte entsprechen dem Farbstoffanteil in %, der beim Zentrifugieren bei den Umdrehungszahlen von 1000, 2000 und 4000 Umdrehungen/Minute nach 5 Minuten sedimentiert (1. - 3. Wert) und der zum Schluß noch in der Dispersion verbleibt (4. Wert). Farbstoffzubereitungen mit kleinen Sedimentationswerten und hohem Endwert sind besonders feinteilig.

Beispiel 25

20 Teile des blauen Dispersionsfarbstoffes der C.I.-Nummer 11345 (berechnet trocken) wurden in Form des wäßrigen Preßkuchens mit
18 Teilen des Dispergiermittels 1,
10 Teilen Sorbit als 70 %ige wäßrige Lösung,
5 Teilen Propylenglykol,
1 Teil eines handelsüblichen wäßrigen Biozids (1,2-Benzisothiazolin-3-on als 9,5 %ige Lösung in Propylenglykol)
und Wasser auf 100 Teile Gesamtgewicht mittels Schnellrührer angeteigt und in einer Rührwerkskugelmühle mit Mahlkörpern aus Glas bis zur Erzielung einer guten Feinverteilung vermahlen. Der pH-Wert lag bei 8,5. Beim Schleudertest wurden folgende Werte erhalten: 2/3/23/72

Die Farbstoffzubereitung war dünnflüssig und lagerstabil und eignete sich sehr gut zum Färben von Polyesterfasern und -geweben nach allen dafür gängigen Färbeverfahren. Insbesondere beim Färben von Mischgeweben aus Polyester/Baumwolle nach dem Thermosolverfahren zeichnet sich die Farbstoffzubereitung durch eine hohe Baumwollreserve aus. Beim Färben von Wickelkörpern aus texturierten Polyesterfaser (Kreuzspulfärbung) wurden keinerlei Abfiltrationen beobachtet.

Beispiel 26

16 Teile des roten Dispersionsfarbstoffes C. J. Disperse, Red 167:1 (berechnet trocken) in Form des wasserfeuchten Preßkuchens wurden mit

16 Teilen des Dispergiermittels 3,

15 Teilen Glycerin und

1 Teil des in Beispiel 25 genannten Biozids und Wasser auf 100 Teile Gesamtgewicht angeteigt, auf pH 7,5 eingestellt und in einer Rührwerkskugelmühle bis zu Erzielung einer guten Feinverteilung vermahlen. Beim Schleudertest wurden folgende Werte erhalten: 5/7/19/69

Die Farbstoffzubereitung zeigte die unter Beispiel 25 beschriebenen Eigenschaften.

Beispiel 27

40 Teile des roten Dispersionsfarbstoffes C. J. Disperse Red 277 in Form des wasserfeuchten Preßkuchens (berechnet trocken) wurden mit

60 Teilen des Dispergiermittels 3 und

Wasser auf einen Feststoffgehalt von 40 % eingestellt, angeteigt und in einer Sandmühle bis zur Erreichung einer guten Feinverteilung gemahlen. Beim Schleudertest wurden folgende Werte ermittelt: 4/5/12/79

Die Dispersion wurde in einem Zerstäubungstrockner bei einer Gaseintrittstemperatur von 120°C getrocknet und durch Zugabe von 100 Teilen des Dispergiermittels 3 auf Endfarbstärke geschwächt. Das dabei erhaltene Farbstoffpulver wies die in der Naßmahlstufe erzielte Feinverteilung auf.

Nach Einrühren in Wasser wurde eine stabile Färbeflotte erhalten, die auch unter HT-Färbebedingungen keine Ausflockungen zeigte und sowohl zum Färben von Wickelkörpern aus texturierten Polyesterfasern als auch zum Thermosolfärben von Polyester/Baumwolle-Mischgewebe sehr gut geeignet war. Insbesondere zeigte diese Zubereitung sehr geringes Anfärben der Baumwollfasern. Der Dispersionsfarbstoff ließ sich aus der Baumwolle sehr gut auswaschen.

Beispiele 28 und 29

25 Teile Fluorescent Brigthener 199 wurden in Form des wasserfeuchten Preßkuchens mit den in der Tabelle genannten Dispergatoren, 15 Teilen Glycerin, 15 Teilen Triethanolamin und Wasser auf 100 Teile Gesamtmenge angeteigt und in einer Perlmühle gemahlen, bis die Feinverteilung, gemessen am Schleuderwert, gut war. Der pH-Wert lag bei 10,0 - 11,0 und wurde bei der Mahlung beibehalten. Die erhaltene Zubereitung war dünnflüssig und lagerstabil. Sie war für das optische Aufhellen von Polyesterfasern und -geweben nach dem HT- und Thermosolverfahren gut geeignet und ergab auch beim Färben von Wickelkörpern aus texturierten Polyesterfasern keine Unegalitäten oder Abfiltrationen.

| Beispiel | Dispergiermittel Nr. | Mahldauer | Feinverteilung Schleuderwert |
|---|---|---|---|
| 28 | 5 | 16 h Perlmahlung | 10,15,36,39 |
| 29[1] | 5 | 14 h Perlmahlung | 13,17,35,35 |

[1] Anstelle von 15 Teilen Glycerin wurden 15 Teile eines Gemisches von Glycerin/Sorbit 2:1 eingesetzt.

Beispiel 30

40 Teile Farbstoff der C.I.-Nummer 69825 wurden in Form des wäßrigen Preßkuchens mit 40 Teilen des Dispergiermittels 3 und der zur Einstellung eines Trockengehaltes von 20 bis 25 % benötigten Wassermenge bei pH 10 bis 11 in einer Perlmühle so lange gemahlen, bis eine gute Feinverteilung erreicht worden war. Der Schleuderwert war 3/8/10/79. Nach dem Absieben der Mahlperlen wurden 18 Teile des eingesetzten Dispergiermittels 2 sowie 1 Teil Di-2-Ethylhexylsulfobernsteinsäureester und 1 Teil Di-$C_{10}$-Alkyldisulfonimid eingerührt, bei einem Trockengehalt von ca. 25 % über eine 3 $\mu$m-Filterkerze filtriert, und anschließend bei einer Lufteingangstemperatur von 130°C sprühgetrocknet.

Das erhaltene Farbstoffpulver ließ sich gut in Wasser redispergieren, war lagerstabil und eignete sich für alle gängigen Färbeverfahren.

Beispiel 31

23 Teile des Farbstoffs der C.I.-Nummer 59825 wurden in Form des wäßrigen Preßkuchens, wurden mit 7 Teilen des Dispergiermittels 3, 15 Teilen einer 70 %igen wäßrigen Sorbitlösung, 1 Teil des handelsüblichen Biozids, das in Beispiel 25 angegeben ist, und Wasser, entsprechend 100 % Gesamtmenge, angeteigt und bei pH 10 bis 11 in einer Perlmühle gemahlen, bis eine gute Feinverteilung erreicht worden war. Der Schleuderwert war 5/16/31/48.

Die erhaltene Farbstoffzubereitung war dünnflüssig, lagerstabil und eignete sich für alle gängigen Färbeverfahren.

Beispiel 32

50 Teile Polyestergarn texturiert, das auf Kreuzspulen gewickelt war, wurden in 1000 Teilen einer wäßrigen Flotte gefärbt, die 2 Teile des gelben Dispersionsfarbstoffes der Colour Index Nr. 47023, 1 Teil des Dispergiermittels aus Beispiel 4 und 1 Gew.-Teil 30%ige Essigsäure enthielt. Der pH-Wert der Flotte betrug 4,5. Die Färbung wurde in einem geschlossenen Färbeapparat mit Flottenzirkulation durchgeführt, in dem man die Flotte mit dauernd wechselnder Strömungsrichtung durch die Kreuzspule pumpte. Die Flotte wurde innerhalb von 30 Minuten von 60 auf 130 °C erhitzt. Man färbte 60 Minuten bei einer Temperatur von 130 °C, erniedrigte dann die Temperatur der Flotte auf 90 °C und ließ die Flotte ab. Das Textilmaterial wurde dann mit einer frischen Flotte, die 0,5 g/l Ätznatron, 2 g/l Natriumdithionit und 0,5 g/l eines nichtionogenen Waschmittels (Kondensationsprodukt aus 1 Mol Oleylamin und 12 Mol Ethylenoxid) enthielt, ca.20 Minuten bei 70 °C reduktiv nachgereinigt und anschließend je einmal mit warmen und kaltem Wasser gespült. Man erhielt eine egale, wasch- und reibechte, gelbe Färbung.

Beispiel 33

Man arbeitete wie im Beispiel 32 angegeben, verwendet jedoch als Farbstoff 2 Teile des Dispersionsfarbstoffes mit der Colour Index Nr. 60756. Man erhielt eine egale, wasch- und reibechte rote Färbung.

Beispiel 34

22 Teile des blauen Dispersionsfarbstoffes C.I. Disperse Blue 60, berechnet trocken in Form des wasserfeuchten Preßkuchens, wurden mit
12 Teilen Dispergiermittel aus Beispiel 20,
10 Teilen Sorbit als 70 %ige wäßrige Lösung,
1 Teil eines handelsüblichen Biozids (1,2-Benzisothiazolin-3-on als 9,5 %ige Lösung in Propylenglykol) und
Wasser auf 100 Teile Gesamtgewicht mittels Schnellrührer angeteigt und in einer Rührwerkskugelmühle mit Mahlkörpern aus Glas bis zur Erzielung einer guten Feinverteilung vermahlen. Der pH-Wert lag bei 8,7. Schleudertest: 3/4/24/69.

Die erhaltene Farbstoffzubereitung war dünnflüssig und lagerstabil und eignete sich sehr gut zum Färben von Garnen und Geweben aus Polyesterfasern nach allen dafür gängigen Färbeverfahren. Beim Färben von Wickelkörpern aus texturierten Polyesterfasern (Kreuzspulfärbung) wurden völlig egale Färbungen erhalten, die keinerlei Abfiltrationen zeigten.

Beispiel 35

25 Teile des roten Dispersionsfarbstoffes C.I. Disperse Red 91, berechnet trocken in Form des wasserfeuchten Preßkuchens, wurden mit
11 Teilen Dispergiermittel aus Beispiel 22,
12 Teilen Sorbit als 70 %ige wäßrige Lösung,
1 Teil des in Beispiel 34 genannten Biozids und Wasser auf 100 Teile Gesamtgewicht angeteigt, auf pH-Wert 8,5 eingestellt und in einer Rührwerkskugelmühle bis zur Erreichung einer guten Feinverteilung vermahlen.

Schleudertest: 7/9/21/63.

Die erhaltene Farbstoffzubereitung zeigt die unter Beispiel 34 beschriebenen Eigenschaften.
Gleiche Ergebnisse wurden im obigen Beispiel 35 mit dem Dispergiermittel aus Beispiel 19 erzielt.

Beispiel 36

40 Teile des roten Dispersionsfarbstoffes C.I. Disperse Red 167:1, berechnet trocken als wäßriger Preßkuchen, wurden mit
60 Teilen Dispergiermittel aus Beispiel 19, und
Wasser zu einer Suspension mit einem Feststoffgehalt von ca. 40 % angeteigt, durch Zugabe von Schwefelsäure (20 %ig) auf einen pH-Wert von 7,5 eingestellt und in einer Rührwerkskugelmühle bis zur Erreichung einer guten Feinverteilung vermahlen.

Schleudertest: 9/13/32/46.

Die Dispersion wurde in einem Zerstäubungstrockner bei einer Gaseintrittstemperatur von 120°C getrocknet und in einem Mischer durch Zugabe von 25 Teilen Dispergiermittel aus Beispiel 23 auf Endfarbstärke abgeschwächt.
Das dabei erhaltene Farbstoffpulver wies die in der Naßmahlstufe erzielte Feinverteilung auf. Nach Einrühren in Wasser wurde eine stabile Färbeflotte erhalten, die die in Beispiel 34 beschriebenen guten färberischen Eigenschaften zeigte.

Beispiel 37

40 Teile des violetten Küpenfarbstoffes C.I. Vat Red 91 in Form des wasserfeuchten Nutschgutes wurden mit
60 Teilen Dispergiermittel aus Beispiel 23 und
Wasser zu einer Suspension mit einem Feststoffgehalt von 38 % angeteigt und in einer Rührwerkskugelmühle bis zur Erreichung einer guten Feinverteilung vermahlen.

Schleudertest: 2/4/7/87.

Nach Trocknung in einem Zerstäubungstrockner bei einer Gaseintrittstemperatur von 130°C wurde durch Zugabe von 20 Teilen des obengenannten Dispergiermittels auf Endfarbstärke eingestellt.
Das so erhaltene Farbstoffpulver zeigte die in der Naßmahlstufe erzielte Feinverteilung auf. Es war lagerstabil, ließ sich sehr gut in Färbeflotten dispergieren und eignete sich hervorragend zum Färben von Baumwollfasern nach allen gängigen Färbeverfahren.

Beispiel 38

23 Teile des Küpenfarbstoffes Vat Green 1 (C.I. 59825) in Form des wäßrigen Preßkuchens wurden mit 10 Teilen Dispergiermittel aus Beispiel 11, 15 Teilen einer 70 %igen wäßrigen Sorbitlösung, 1 Teil eines handelsüblichen Biozids (1,2-Benzisothiazolin-3-on als 9,5 %ige Lösung in Propylenglykol) und Wasser auf 100 Teile Gesamtgewicht angeteigt und bei pH 10 bis 11 in einer Perlmühle gemahlen, bis eine gute Feinverteilung erreicht worden war. Der Schleuderwert war 4/14/29/53.
Die erhaltene Farbstoffzubereitung war dünnflüssig, lagerstabil und eignete sich für alle gängigen Färbeverfahren.

Beispiel 39

40 Teile des Küpenfarbstoffes Vat Blue 6 (C.I. 69825) in Form des wäßrigen Preßkuchens wurden mit 60 Teilen Dispergiermittel aus Beispiel 11 und der zur Einstellung eines Trockengehaltes von 20 bis 25 % benötigten Wassermenge bei pH 10 und 11 in einer Rührwerkskugelmühle gemahlen, bis eine gute Feinverteilung erreicht worden war.

Der Schleuderwert war 5/10/12/73.

Nach der Mahlung wurde der Trockengehalt auf ca. 25 % eingestellt und nach Zugabe von 1 Teil Di-2-Ethylhexylsulfobernsteinsäureester und 1 Teil Di-$C_{10}$-Alkyldisulfonimid so oft über 3 μm Filterkerzen filtriert, bis die Farbstoffsuspension stippenfrei war. Sprühgetrocknet wurde bei einer Lufteingangstemperatur von ca. 150 °C.

Das erhaltene Farbstoffpulver ließ sich in Wasser gut dispergieren, war lagerstabil und eignete sich für alle gängigen Färbeverfahren.

Beispiel 40

Das gleiche Ergebnis wurde im obigen Beispiel 39 erhalten, wenn anstelle des Dispergiermittels aus Beispiel 11 die Mischung aus Beispiel 12 eingesetzt wurde.

Beispiel 41

20 Teile des blauen Azodispersionsfarbstoffes C.I. 11345 berechnet trocken in Form des wasserfeuchten Preßkuchens wurden mit
18 Teilen Dispergiermittel aus Beispiel 6,
15 Teilen Sorbit als 70 %ige wäßrige Lösung und
1 Teil eines handelsüblichen Biozids und
Wasser auf 100 Teile Gesamtgewicht mittels eines Schnellrührers angeteigt und in einer Rührwerkskugelmühle mit Mahlkörpern aus Glas bis zur Erzielung einer guten Feinverteilung gemahlen. Der pH-Wert lag bei 8,3.

Schleudertest: 3/3/18/76.

Die Farbstoffzubereitung war dünnflüssig und lagerstabil und eignete sich sehr gut zum Färben von Polyesterfasern und -geweben nach allen hierfür üblichen Färbeverfahren. Die Zubereitung zeichnete sich insbesondere durch eine hohe Baumwollreserve beim Färben von Polyester/Baumwoll-Mischgewebe nach dem Thermosolverfahren aus. Beim Färben von Wickelkörpern aus texturierten Polyesterfasern wurden keinerlei Abfiltrationen beobachtet.

**Patentansprüche**

1. Verwendung von Zubereitungen auf Basis üblicher Dispergiermittel, gekennzeichnet durch einen Gehalt von 3 bis 50 Gew.-% einer oder mehrerer aromatischer oder langkettiger aliphatischer Carbonsäuren, deren Salzen oder deren Anhydriden oder einer Mischung hieraus, als Dispergiermittel mit erhöhter biologischer Eliminierbarkeit oder Abbaubarkeit in Farbstoff- und Pigmentpräparationen.

2. Verwendung von Zubereitungen nach Anspruch 1, enthaltend
   A) 50 bis 97 Gew.-% eines oder mehrerer Arylsulfonsäure-Formaldehyd-Kondensate, eines oder mehrerer Sulfonate von Phenol-Formaldehyd-Kondensaten, eines oder mehrerer Ligninsulfonate oder einer Mischung hieraus und
   B) 3 bis 50 Gew.-% einer oder mehrerer aromatischer oder langkettiger aliphatischer Carbonsäuren, deren Salzen oder deren Anhydriden oder einer Mischung hieraus,
   wobei die Zugabe der Komponenten B vor, während oder nach dem Sulfonierungsschritt oder dem Kondensationsschritt bei der Herstellung der Komponenten A erfolgt.

3. Verwendung von Zubereitungen nach Anspruch 1 in Farbstoffzubereitungen und in Färbebädern.

4. Verwendung von Zubereitungen auf Basis von Kondensaten von Arylsulfonsäuren und Formaldehyd nach Anspruch 2, die erhältlich sind durch
   (a) Sulfonieren aromatischer Verbindung zu Arylsulfonsäuren,
   (b) Kondensieren der Arylsulfonsäuren mit Formaldehyd
   und wobei die Sulfonierung (a) oder die Kondensation (b) oder beide Schritte in Gegenwart von 5 bis 50 Gew.-%, bezogen auf die bei der Sulfonierung (a) eingesetzten aromatischen Verbindungen, an aromatische Gruppen oder langkettige aliphatische Reste enthaltenden Carbonsäuren, deren Salzen

14

oder deren Anhydriden erfolgt.

5. Verwendung von Zubereitungen nach Anspruch 4, dadurch gekennzeichnet, daß die Kondensate erhältlich sind durch (a) Sulfonieren von Naphthalin oder von Gemischen aromatischer Verbindungen, die mindestens 10 Gew.-% Naphthalin enthalten.

6. Verwendung von Zubereitungen nach Anspruch 4, dadurch gekennzeichnet, daß die Kondensate erhältlich sind durch (a) Sulfonieren von Arylverbindungen, die herstellbar sind durch thermische Spaltung eines naphthenischen Rückstandsöls und die bei der fraktionierten Destillation der Spaltprodukte die bei 100 bis 120 ° C und 1013 mbar übergehende Fraktion bilden.

7. Verwendung von Zubereitungen auf Basis von Kondensaten von Arylsulfonsäuren und Formaldehyd nach Anspruch 2, die erhältlich sind durch nachträgliches Zumischen der aromatischen oder langkettigen aliphatischen Carbonsäuren B oder deren Salzen und Anhydriden zu den Verbindungen A.

## Claims

1. The use of formulations based on customary dispersants, which contain from 3 to 50% by weight of one or more aromatic or long-chain aliphatic carboxylic acids, salts thereof or anhydrides thereof or a mixture thereof, as dispersants if increased bioeliminability or biodegradability in dye and pigment preparations.

2. The use of formulations as claimed in claim 1, containing
   A) from 50 to 97% by weight of one or more arenesulfonic acid-formaldehyde condensates, one or more sulfonates of phenol-formaldehyde condensates, one or more ligninsulfonates or a mixture thereof, and
   B) from 3 to 50% by weight of one or more aromatic or long-chain aliphatic carboxylic acids, salts thereof or anhydrides thereof or a mixture thereof,
   the addition of component B taking place before, during or after the sulfonation step or the condensation step in the preparation of component A.

3. The use of formulations as claimed in claim 1 in dye formulations and dyebaths.

4. The use of formulations based on condensates of arenesulfonic acids and formaldehyde as claimed in claim 2, obtainable by
   (a) sulfonating an aromatic compound to the arenesulfonic acids and
   (b) condensing the arenesulfonic acids with formaldehyde,
   the sulfonation (a) or the condensation (b) or both steps being effected in the presence of from 5 to 50% by weight, based on the aromatic compounds used in the sulfonation (a), of aryl-containing or long-chain alkyl-containing carboxylic acids or salts or anhydrides thereof.

5. The use of formulations as claimed in claim 4, wherein the condensates are obtainable by (a) sulfonating naphthalene or mixtures of aromatic compounds containing at least 10% by weight of naphthalene.

6. The use of formulations as claimed in claim 4, wherein the condensates are obtainable by (a) sulfonating arene compounds which are preparable by the thermo-cracking of a naphthenic residue oil and which form the fraction which in the course of the fractional distillation of the cracking products passes over at 100-120 ° C and 1013 mbar.

7. The use of formulations based on condensates of arenesulfonic acids and formaldehyde as claimed in claim 2, obtainable by subsequently mixing the aromatic or long-chain aliphatic carboxylic acids B or salts and anhydrides thereof into the compounds A.

## Revendications

1. Utilisation de préparations à base d'agents dispersifs usuels, qui se caractérisent par une teneur de 3 à 50% en poids en un ou plusieurs acides carboxyliques aromatiques ou aliphatiques à longue chaîne, leurs sels et leurs anhydrides, ou un mélange de ces composés, à titre d'agents dispersifs à dégradabilité ou à éliminabilité biologique augmentée dans des préparations de colorants et de pigments.

2. Utilisation de préparations suivant la revendication 1, qui contiennent

A) 50 à 97% en poids d'un ou plusieurs produits de condensation du formaldéhyde et d'acides arylsulfoniques, d'un ou plusieurs sulfonates de produits de condensation du formaldéhyde et du phénol, d'un ou plusieurs ligninesulfonates, ou d'un mélange de ces produits et

B) 3 à 50% en poids d'un ou plusieurs acides carboxyliques aromatiques ou aliphatiques à longue chaîne, de leurs sels ou de leurs anhydrides, ou d'un mélange de ceux-ci,

où l'addition du composant B s'effectue avant, pendant ou après l'étape de sulfonation ou l'étape de condensation au cours de la préparation du composant A.

3. Utilisation de préparations suivant la revendication 1 dans des préparations de colorants et des bains de teinture.

4. Utilisation de préparations à base de produits de condensation d'acides arylsulfoniques et du formaldéhyde suivant la revendication 2, que l'on peut obtenir par

a) la sulfonation de composés aromatiques en acides arylsulfoniques

b) la condensation des acides arylsulfoniques avec le formaldéhyde

et où la sulfonation (a,) ou la condensation (b), ou ces deux étapes à la fois, s'effectuent en présence de 5 à 50% en poids, par rapport aux composés aromatiques mis en oeuvre au cours de la sulfonation (a), d'acides carboxyliques contenant des radicaux aromatiques ou des restes aliphatiques à longue chaîne, de leurs sels ou de leurs anhydrides.

5. Utilisation de préparations suivant la revendication 4, caractérisée en ce que l'on peut obtenir les produits de condensation par (a) la sulfonation du naphtalène, ou de mélanges de composés aromatiques qui contiennent au moins 10% en poids de naphtalène.

6. Utilisation de préparations suivant la revendication 4, caractérisée en ce que l'on peut obtenir les produits de condensation par (a) la sulfonation de composés aryliques, que l'on peut préparer par la scission thermique d'une huile résiduaire naphténique et la distillation fractionnée des produits de scission qui forment une fraction passant à 100-120°C et à 1013 mbars.

7. Utilisation de préparations à base de produits de condensation d'acides arylsulfoniques et du formaldéhyde suivant la revendication 2, que l'on peut obtenir par le mélange subséquent des acides carboxyliques aromatiques ou aliphatiques à longue chaîne B, ou de leurs sels et de leurs anhydrides, aux composés A.